# EUROPEAN PATENT APPLICATION

(11) **EP 2 221 905 A1**
(43) Date of publication of application: **25.08.2010**
(21) Application number: 08859284.5
(22) Date of filing: 14.10.2008
(51) Int. Cl.: H01M 6/08, H01M 4/06, H01M 4/62

(54) **ALKALINE PRIMARY BATTERY**

(30) Priority: 13.12.2007 JP 2007322446
(71) Applicant: Panasonic Corporation, Kadoma-shi Osaka 571-8501 (JP)
(72) Inventor: Harunari SHIMAMURA, Osaka-shi ,Osaka 540-6207 (JP); Jun NUNOME, Osaka -shi ,Osaka 540-6207 (JP); Fumio KATO, Osaka-shi, Osaka 540-6207 (JP); Yasuhiko BITO, Osaka -shi,osaka 540-62207 (JP)
(74) Representative: TBK-Patent
(86) International application number: PCT/JP2008/002903
(87) International publication number: WO 2009/075049

(57) **Abstract**

An alkaline primary battery provided with a positive electrode containing a positive electrode active material and graphite, a negative electrode containing a negative electrode active material, a separator, and an alkaline electrolyte, the positive electrode active material containing manganese dioxide, the alkaline electrolyte containing zinc oxide, and the positive electrode containing metatitanic acid. Due to this, in a battery in which an alkaline electrolyte contains zinc oxide, productions of hetaerolite and the like at the positive electrode and depositions of titanium compound, zinc oxide, and the like on the inner face of a battery case are suppressed, and thus, excellent discharge performance and storage characteristics can be obtained.

## Description

### [Technical Field]

The present invention relates to an alkaline primary battery, particularly, to an improvement of a positive electrode.

### [Background Art]

Alkaline primary batteries have an inside-out structure and have cylindrical positive electrode material mixture pellets that are disposed so as to adhere to the inner side of a battery case serving as a positive electrode terminal. In the hollow of the positive electrode material mixture pellets, a gelled negative electrode is filled, with a separator interposed therebetween. In general, the positive electrode material mixture pellets contain manganese dioxide as a positive electrode active material and graphite as a conductive material.

With the recent dissemination of digital devices, load power of devices using alkaline primary batteries is gradually getting higher. Therefore, batteries having excellent heavy load discharge performance both before and after storage, in addition to middle load discharge performance, are gradually growing in demand.

PTL 1 proposes to add an additive selected from the group consisting of Ti(OH)₄ and TiO(OH)₂ to a positive electrode, so as to improve middle load discharge performance. It is described that due to this, the retention capacity for an alkaline electrolyte improves in the positive electrode, thereby enabling middle load discharge performance to improve.

PTL 2 proposes to add a titanium compound to a positive electrode, so as to improve discharge performance of a battery after storage. By adding the titanium compound to the positive electrode, occurrence of rust in a battery can at the time of storage is suppressed, and increase of internal resistance of the battery is suppressed. It is described that due to this, discharge performance of a battery after storage improves.

PTL 3 proposes to form a film containing a titanium compound and graphite on the inner face of a battery case, so as to suppress corrosion of iron which occurs due to fine cracks in the nickel plating on the inner face of the battery case. It is described that due to this, discharge performance of a battery after storage improves.

### [Citation List]

[Patent Literatures]
[PTL 1] Japanese Laid-Open Patent Publication No. 2003-203635
[PTL 2] Japanese Laid-Open Patent Publication No. 2005-166419
[PTL 3] Japanese Laid-Open Patent Publication No. 2006-12733

### [Summary of Invention]

### [Technical Problem]

In an alkaline primary battery, it is preferable that zinc oxide (ZnO) is added to an alkaline electrolyte, so as to: suppress occurrence of gas originating from corrosion of zinc contained in a negative electrode; make the open-circuit voltage, for example, be 1.65 V or less; and the like.

However, in the case where ZnO is added to the alkaline electrolyte, when the battery voltage becomes around 1 V in the discharging process, ZnO in the alkaline electrolyte and manganese oxide of a positive electrode start to react. Due to this reaction, hetaerolite (composite oxide of Mn and Zn : ZnO · Mn203) and the like are produced. It is considered that when hetaerolite and the like are produced, polarization of the positive electrode increases, thereby causing internal resistance to rise, and thus, discharge performance of the battery degrades.

In addition, when a titanium compound is added to the positive electrode, ZnO may be deposited together with the titanium compound on the inner face of a battery case at times of discharging and storage of the battery. When the deposition amount of ZnO becomes large, internal resistance rises and thus, discharge performance degrades.

Given this factor, an object of the present invention is to suppress productions of hetaerolite and the like at the positive electrode, as well as to suppress depositions of titanium compound and ZnO on the inner face of the battery case in a battery with an alkaline electrolyte added with ZnO. Due to this, rise of internal resistance of the battery is suppressed, and thus, an alkaline primary battery having both excellent discharge performance and storage characteristics can be provided.

### [Solution to Problem]

An alkaline primary battery of the present invention is provided with: a positive electrode containing a positive electrode active material and graphite; a negative electrode containing a negative electrode active material; a separator; and an alkaline electrolyte. The positive electrode further contains metatitanic acid (TiO(OH)₂). The positive electrode active material contains manganese dioxide and the alkaline electrolyte contains zinc oxide.

According to the present invention, productions of hetaerolite and the like, originating from ZnO in the alkaline electrolyte reacting with manganese oxide in the positive electrode, can be suppressed. Due to this, an alkaline primary battery having excellent discharge performance can be provided, since polarization of the positive electrode is suppressed, enabling the rise of internal resistance to be suppressed.

It is preferable that an amount of metatitanic acid relative to the total of the positive electrode active material and graphite is 0.05 to 0.9 wt%.
It is preferable that a Ti content in the positive electrode is 0.015 to 0.43 wt% in an undischarged battery.
It is preferable that an amount of zinc oxide contained in the alkaline electrolyte is 0.1 to 5 wt%.
It is preferable that zinc oxide is contained in the positive electrode also. It is preferable that an amount of zinc oxide contained in the positive electrode is 0.03 to 3 wt% relative to the alkaline electrolyte in an undischarged battery.

In a chart for X-ray diffraction using CuKa ray for the positive electrode after discharging until a battery voltage becomes 0.9 V, when the diffraction peak intensity having the highest intensity within the range of 2θ = 20° to 23° is referred as A, and the diffraction peak intensity having the highest intensity within the range of 2θ = 11° to 14° is referred as B, it is preferable that a value B/A is 1 or smaller.

It is preferable that the value B/A of the positive electrode after discharging until the battery voltage becomes 0.7 V, is 1 or greater.
It is preferable that the value B/A of the positive electrode after discharging until the battery voltage becomes 0.9 V, is 0.52 or smaller.

### [Advantageous Effects of Invention]

According to the present invention, in a battery with an alkaline electrolyte added with ZnO, productions of hetaerolite and the like at a positive electrode are suppressed, and also, depositions of titanium compound and ZnO on the inner face of a battery case are suppressed. Due to this, the rise of internal resistance of the battery is suppressed, and thus, an alkaline primary battery having both excellent discharge performance and storage characteristics can be provided.

### [Brief Description of Drawings]

FIG. 1 is an elevation partly in section of an alkaline primary battery according to the Examples of the present invention.
FIG 2 is a view showing the pattern of diffraction peaks of the positive electrode of Example 3 of the present invention.
FIG. 3 is a view showing the pattern of diffraction peaks of the positive electrode of Comparative Example 1 of the present invention.

### [Description of Embodiments]

The present invention relates to an alkaline primary battery provided with: a positive electrode containing a positive electrode active material and graphite; a negative electrode containing a negative electrode active material; a separator; and an alkaline electrolyte, in which the positive electrode contains metatitanic acid. The positive electrode active material contains manganese dioxide and the alkaline electrolyte contains zinc oxide.

In the present invention, the alkaline electrolyte contains zinc oxide. Due to this, occurrence of gas originating from corrosion of the negative electrode can be suppressed. However, zinc oxide reacts with manganese dioxide contained in the positive electrode, thereby producing hetaerolite and the like. When hetaerolite and the like are produced, discharge performance and storage characteristics result in degradation.

Given this factor, in the present invention, metatitanic acid is added to the positive electrode. By adding metatitanic add to the positive electrode, productions of hetaerolite and the like, originating from manganese oxide in the positive electrode and ZnO in the alkaline electrolyte reacting with one another at the time of discharging, can be suppressed. Due to this, the rise of internal resistance of the battery can be suppressed, and thus, an alkaline primary battery having excellent discharge performance can be provided.

Details on a mechanism in which productions of hetaerolite and the like are suppressed by adding metatitanic add to the positive electrode are unclear, but it is considered as follows:
Manganese dioxide in the positive electrode produces MnOOH, due to discharging. It is considered that hetaerolite is produced at approximately around 1 V due to an interaction between MnOOH produced due to discharging and a Zn(OH)₄²⁻ ion originating from ZnO. Other than hetaerolite, various by-products having influence on characteristics of the battery are considered to be produced. Although details on the by-products are unclear, for example, according to XRD indexing, a product that is considered as K_{0.5}Mn₂O₄ · 1.5H₂O is considered to be produced due to discharging.
By adding metatitanic add to the positive electrode and allowing metatitanic add to exist adjacent to MnOOH, productions of by-products as described above are inhibited. Thus, productions of hetaerolite and the like can be suppressed.

It is preferable that an amount of metatitanic add relative to the total of the positive electrode active material and graphite is 0.05 to 0.9 wt%. In addition, a Ti content in the positive electrode is 0.015 to 0.43 wt%. Due to this, an alkaline primary battery having excellent discharge performance and storage characteristics can be obtained. It is more preferable that the Ti content in the positive electrode is 0.044 to 0.23 wt%. Due to this, an alkaline primary battery having excellent discharge performance and storage characteristics can be obtained.

When the amount of metatitanic acid relative to the total of the positive electrode active material and graphite is smaller than 0.05 wt%, productions of hetaerolite and the like at the time of discharging may not be sufficiently suppressed.
On the other hand, when the amount of metatitanic add is larger than 0.9 wt%, it becomes easier for titanium compound and ZnO to be deposited on the inner face of the battery case, and internal resistance may rise.
More specifically, by making the amount of metatitanic add be 0.05 to 0.9 wt%, depositions of titanium compound and ZnO on the inner face of the battery case can be suppressed, while productions of hetaerolite and the like are effectively suppressed as well.
It is more preferable that the amount of metatitanic add relative to the total of the positive electrode active material and graphite is 0.1 to 0.5 wt%.

The positive electrode active material may contain, for example, a nickel oxyhydroxide powder as an optional ingredient. Due to the positive electrode active material containing the nickel oxyhydroxide powder, it is considered that heavy load discharge characteristics and battery capacity further improve.

From the aspect of ensuring both heavy load discharge characteristics and battery capacity, the weight ratio of the nickel oxyhydroxide powder to an electrolytic manganese dioxide powder is preferably 20 : 80 to 90 : 10, and more preferably, 20 : 80 to 50 : 50. When the weight ratio of electrolytic manganese dioxide is 10% or more, the effect of the present invention can be sufficiently obtained.

The positive electrode contains the positive electrode active material and metatitanic acid as indispensable ingredients, and can contain, for example, a conductive material, an alkaline electrolyte, and the like as optional ingredients. Although the conductive material is not particularly limited, for example, a graphite powder is used. An amount of the conductive material in the positive electrode is, for example, 3 to 10 wt%.

The positive electrode of the alkaline primary battery is composed of positive electrode material mixture pellets. A method for preparing the positive electrode material mixture pellet is not particularly limited. For example, after the positive electrode active material and the conductive material are mixed, metatitanic add, an alkaline electrolyte, and if required, polyethylene and the like are added to the mixture, and then kneaded by using a mixer and the like. The resultant serves as a positive electrode material mixture. After kneading, the positive electrode material mixture is granulated, and the granulated particles are regulated to a certain particle size, thereby obtaining a particulate matter. By molding this particulate matter into a hollow cylindrical shape, the positive electrode material mixture pellet is obtained.

The alkaline electrolyte contains an alkaline aqueous solution and zinc oxide. It is preferable that an amount of zinc oxide contained in the alkaline electrolyte is 0.1 to 5 wt%. When the amount of zinc oxide is less than 0.1 wt%, the effect of suppressing the occurrence of gas may not be sufficiently obtained. On the other hand, when the amount exceeds 5 wt%, it becomes easier for zinc oxide to be deposited on the inner face of the battery case, and thus, high-rate characteristics may degrade. From the aspect of further suppressing the occurrence of gas, as well as further suppressing the deposition of zinc oxide on the inner face of the battery case, it is more preferable that the amount of zinc oxide contained in the alkaline electrolyte is 0.5 to 3 wt%.
The alkaline aqueous solution is not particularly limited. For example, an aqueous potassium hydroxide solution, an aqueous sodium hydroxide solution, and the like may be used. In the case where the aqueous potassium hydroxide solution is used, it is preferable that the concentration of potassium hydroxide is, for example, 30 to 40 wt%.

For the negative electrode, a gelled negative electrode containing the negative electrode active material, a gelling agent, and the alkaline electrolyte is used. The gelled negative electrode is obtained by mixing the negative electrode active material the gelling agent, and the alkaline electrolyte.

As the negative electrode active material, a zinc powder or a zinc alloy powder is used. Although metals contained in the zinc alloy powder other than zinc are not particularly limited, for example, aluminum, bismuth, indium, and the like can be given.

The particle size of the negative electrode active material is not particularly limited. For example, the zinc powder or the zinc alloy powder containing 60 to 80 wt% of powder whose particle size exceeds 75 µm and is 425 µm or smaller, and containing 20 to 40 wt% of powder whose particle size is 75 µm or smaller, is used as the negative electrode active material.

Although the gelling agent of the negative electrode is not particularly limited, for example, sodium polyacrylate and the like are used.

Although the separator is not particularly limited, for example, a non-woven fabric mainly blended of polyvinylalcohol fiber and rayon fiber may be used.

One embodiment of an alkaline primary battery will be described below with reference to a Figure.

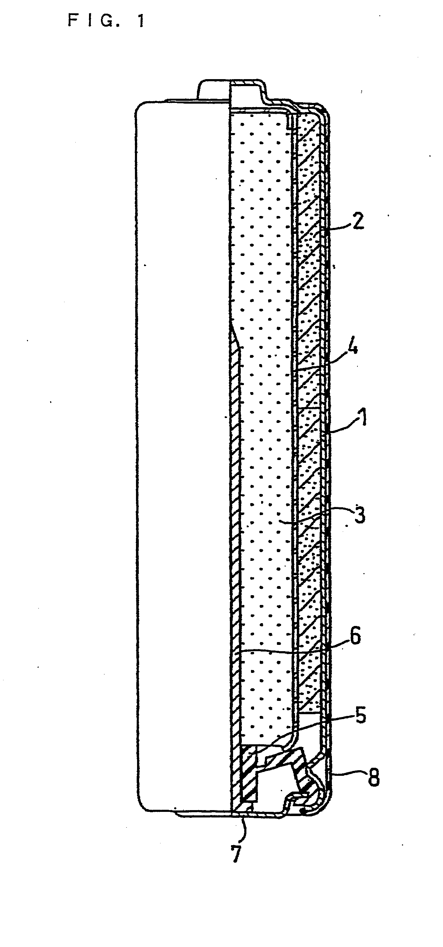

FIG 1 is an elevation partly in section of an alkaline primary battery according to one embodiment of the present invention. The alkaline primary battery is provided with a battery case 1, positive electrode material mixture pellets 2, a gelled negative electrode 3, a separator 4, and an alkaline electrolyte. The positive electrode material mixture pellet 2 includes a positive electrode active material, a conductive material, and the alkaline electrolyte. The battery case 1 serves as a positive electrode terminal, and for example, is composed of a nickel-plated steel plate. A graphite film may be formed on the inner face of the battery case 1.

One example of a method for fabricating an alkaline primary battery will be described below.
A plurality of positive electrode material mixture pellets 2 having a hollow cylindrical shape, are inserted into the battery case 1, and remolded by using a pressure jig. Then, the positive electrode material mixture pellets 2 are adhered to the inner wall of the battery case 1. In the center of the positive electrode material mixture pellets 2, the separator 4 having a dosed-bottomed cylindrical shape is disposed. Into the inner side of the separator 4, a predetermined amount of the alkaline electrolyte is injected. After the elapse of a predetermined time, the gelled negative electrode 3 is filled into the inner side of the separator 4, and at the center of the gelled negative electrode 3, a negative electrode current collector 6 is disposed. To the negative electrode current collector 6, a gasket 5 and a bottom plate (sealing plate) 7 serving as a negative terminal are integrated. The opening portion of the battery case 1 is sealed, by crimping the opening end portion of the battery case 1 onto the peripheral edge portion of the bottom plate 7 with the end portion of the resin-based gasket 5 interposed therebetween. Finally, the outer surface of the battery case 1 is covered with an exterior label 8. Due to this, an alkaline primary battery can be obtained.

Here, in a chart for X-ray diffraction using CuKa ray for the positive electrode, the diffraction peak intensity having the highest intensity within the range of 2θ = 20° to 23° is referred as A, and the diffraction peak intensity having the highest intensity within the range of 2θ = 11° to 14° is referred as B. It should be noted that a peak intensity is defined by the height of a peak including the background.

At this time, it is preferable that a value B/A ((B/A)_{0.9}) of the positive electrode after discharging until the battery voltage becomes 0.9 V, is 1 or smaller. When the value of (B/A) _{0.9} is 1 or smaller, it is considered that productions of hetaerolite and the like are sufficiently suppressed. When the value of (B/A) _{0.9} is larger than 1, since productions of hetaerolite and the like increase, the rise of internal resistance of the battery becomes greater, and thus, discharge characteristics may degrade. It is more preferable that the value of (B/A) _{0.9} is 0.2 to 0.8, particularly preferable being 0.2 to 0.52, since good discharge characteristics can be obtained.

The peak having the highest intensity within the range of 2θ = 20° to 23°, is one of the peaks originating from manganese oxide. The peak having the highest intensity within the range of 2θ = 11° to 14°, is one of the peaks originating from hetaerolite and the like. It should be noted that, in the case where identification of a diffraction peak within the range of 2θ = 20° to 23° is difficult, the peak intensity (including the background intensity) at 2θ = 21.6° is regarded as peak intensity A. In addition, in the case where identification of a diffraction peak within the range of 2θ = 11° to 14° is difficult, the peak intensity (including the background intensity) at 2θ = 12.48° is regarded as peak intensity B.

With respect to the above, when the value of (B/A)_{0.9} is 1 or smaller, it can be said that productions of hetaerolite and the like at the time of discharging are sufficiently suppressed in that positive electrode. Due to using this positive electrode, an alkaline primary battery having excellent discharge characteristics can be provided.

With respect to discharging until 0.9 V which is within usage range of the battery, depositions of hetaerolite and the like produced due to the reaction between manganese oxide in the positive electrode and ZnO in the alkaline electrolyte are suppressed, and the amount of ZnO deposited on the inner face of the battery case can be kept to a minimum. More specifically, by suppressing the influence due to the deposition of ZnO as well as suppressing productions of hetaerolite and the like, internal resistance of the battery is suppressed, and thus, discharge characteristics of the battery can be effectively improved.

It is preferable that the value B/A ((B/A)_{0.7}) of the positive electrode after discharging until the battery voltage becomes 0.7 V, is 1 or larger. In the case where the value of (B/A) or is smaller than 1, there is a possibility that metatitanic acid is added more than required. When the content of metatitanic acid becomes large, the deposition amount of ZnO on the inner face of the battery case may become large. Therefore, the rise of internal resistance of the battery becomes greater, and thus, discharge characteristics may degrade. It is more preferable that the value of (B/A) _{0.7} is 1.3 to 3.

Hereinafter, the present invention will be described specifically with reference to the Examples. It should be noted that the present invention is not limited to the following Examples.

### [Examples]

### [Example 1]

### (1) Fabrication of Positive Electrode Material Mixture Pellet

Electrolytic manganese dioxide (manufactured by Tosoh Hyuga Corporation, Product No. HH-TF7) and graphite were mixed at a weight ratio of 95 : 5. Further, respective to the total weight of electrolytic manganese dioxide and graphite, 0.2 wt% of metatitanic acid powder (manufactured by Titanium Industrial Co., Ltd., Product No. ST-101T), 0.2 wt% of polyethylene powder (manufactured by E.I. du Pont de Nemours and Co., Product No. HA1681 and 1.5wt% of an alkaline electrolyte, were each added to the mixture. Subsequently, kneading and mixing were performed by using a mixer until the mixture became uniform. The obtained mixture was granulated by a roller compactor, and the granulated powder was regulated to a certain particle size. The obtained particulate matter was pressure molded into a hollow cylindrical shape, and thus, a positive electrode material mixture pellet was obtained. It should be noted that for the alkaline electrolyte, an aqueous solution containing 39 wt% of potassium hydroxide (with 2 wt% of ZnO added) was used.
The weight of the positive electrode material mixture pellet was 5.58 g, and the weight of electrolytic manganese dioxide contained therein was 5.202 g.

### (2) Preparation of Gelled Negative Electrode

Zinc powder being a negative electrode active material, sodium polyacrylate being a gelling agent, In(OH)₃, and an alkaline electrolyte were mixed at a weight ratio of 65.17 : 0.75 : 0.02 : 33.94, respectively, and thus, a gelled negative electrode was prepared. For the alkaline electrolyte, an aqueous potassium hydroxide solution containing 0.1 wt% of ZnO was used. The potassium hydroxide concentration was 33 wt%.

### (3) Fabrication of Alkaline Primary Battery

An AA-sized alkaline primary battery was fabricated. Positive electrode material mixture pellets 2 and a separator 4 were inserted into a battery case 1, and an alkaline electrolyte was injected into the battery case 1. Due to this, the positive electrode material mixture pellets 1 and the separator 4 were moistened. For the separator 4, a non-woven fabric mainly blended of polyvinylalcohol fiber and rayon fiber was used. After the alkaline electrolyte was injected, a gelled negative electrode 3 was filled into the inner side of the separator 4. Then, the opening end portion of the battery case 1 was crimped onto the peripheral edge portion of a bottom plate with the peripheral edge portion of a gasket interposed therebetween, and thus, the opening of the battery case was sealed. Finally, the outer surface of the battery case 1 was covered with an exterior label 8, and thus, the AA-sized battery was fabricated.

### [Evaluation Method for Battery]

### (4) Determination of Amount of Ti Content in Positive Electrode of Undischarged Battery

The battery fabricated in (3), in an undischarged state, was stored (aged) at 40°C for 3 days. Subsequently, the battery was disassembled, and the positive electrode material mixture was taken out. Then, the positive electrode material mixture was grinded in an agate mortar. Distilled water was added to the grinded positive electrode material mixture, and then the mixture was kneaded. After leaving the mixture to stand for 1 day, the supernatant liquid was disposed. Subsequently, distilled water was added in the same manner to the residue, the mixture was kneaded, and then, after performing the same operation as the above, the mixture was dried at 50°C for 1 day. 1 g of the dried positive electrode material mixture and 10 ml of hydrochloric acid of 12 mol/L were mixed, and then thermal dissolution was performed by heating the mixture at 200°C for 1 hour by using a hot plate.
Subsequently, after filtering and removing those that were insoluble, an ICP emission spectroscopy analysis was performed by using VISTA-RL manufactured by VARIAN, Inc., and thus, the amount of Ti in the diluted solution was determined. As a result, the Ti content in the positive electrode was 0.09 wt%.

### (5) Determination of ZnO Amount in Undischarged Battery

### (i) Determination of ZnO Amount in Electrolyte

The battery fabricated in (3), in an undischarged state, was stored at 40°C for 3 days. Subsequently, the battery was disassembled, and a current collector, a gelled negative electrode, and a separator were taken out. Then, the gelled negative electrode was put into a beaker. Further, by using pure water, the gelled negative electrode attached on the current collector and the separator was collected into the beaker. After the supernatant liquid was collected, the gelled negative electrode was washed by using 30 ml of pure water, and the supernatant liquid was further collected. While care was taken to prevent zinc powder from getting mixed in the supernatant liquid, this operation was performed 5 times, and all of the obtained supernatant liquids were used as a sample solution.

A 1N HCl solution was added to the sample solution until a white liquid-bome material (Zn(OH)₂) dissolved, and then, the pH was regulated to about 4 by using NaOH and HCl. Subsequently, the resultant was diluted to 500 ml by adding pure water, and then, was left to stand, thereby allowing Zn powder that got mixed in the sample solution to precipitate.

Subsequently, 50 ml of the sample solution was measured and taken by a whole pipette, was added with 5 ml of an acetic acid - ammonium acetate buffer solution and a few drops of an XO (xylenol orange) indicator, and then, was titrated by a 0.01 M EDTA (ethylene diamine tetraacetic acid) solution. Due to this, an amount of ZnO in the electrolyte was determined. It should be noted that the point when the color of the solution became yellow from purplish-red and was in a state of being yellow for 3 minutes or longer, was referred as the end point of the titration.

### (ii) Determination of ZnO Amount in Positive Electrode Material Mixture

A positive electrode material mixture was taken out from the battery disassembled in (5)(i), and the positive electrode material mixture was grinded by using a mortar. To 5 g of the grinded positive electrode material mixture, 50 ml of concentrated sulfuric add was added. Subsequently, by using a hot plate, the mixture was heated so as to boil weakly, thereby allowing the positive electrode material mixture to dissolve. After being left to cool, a few drops of a hydrogen peroxide solution (raw solution: concentration of 30 to 35.5%) were dropped in so as to check that no bubbles arose. In the case where bubbles arose, concentrated sulfuric acid was further added, and the above operation was repeated until the dissolving was complete. Subsequently, heating was performed again so as to bring to a weak boil, until the hydrogen peroxide was completely decomposed. After being left to cool, a suction filtration was performed by using a glass filter (1 G-4) of a known mass. Pure water was added to the filtrate to be diluted to 250 ml. From this solution, 10 ml was taken by a whole pipette, and then, was added with pure water and diluted to 250 ml in a measuring flask. On the diluted solution, an ICP emission spectroscopy analysis was performed by using VISTA-RL manufactured by VARIAN, Inc., and thus, the Zn amount in the diluted solution was determined.
The sum of the ZnO amount of (i) and the ZnO amount of (ii) was referred as the ZnO amount contained in an undischarged battery, more specifically, an ZnO amount (wt%) in an alkaline electrolyte included in an undischarged battery.
It should be noted that, in the case where metatitanic acid is not added to a positive electrode, the detectable amount of ZnO becomes slightly more than the formulated ZnO amount, and as the added amount of metatitanic acid increases, the detectable amount of ZnO tends to become smaller.

### (6) Evaluation of Discharge Characteristics of Battery

Discharge Condition (A): The battery fabricated in (3), in an undischarged state, was stored at 40°C for 3 days. Subsequently, the battery was discharged at 250 mA for 1 hour, and then, there was a pause for 23 hours. This operation, as 1 set, was repeated, and the total of the discharge time until the battery voltage became 0.9 V was determined. Discharging was performed in an atmosphere of 20°C.

Discharge Condition (B): The battery fabricated in (3), in an undischarged state, was stored at 40°C for 3 days. Subsequently, the battery was discharged at 1500 mW for 2 seconds, and then, was discharged at 650 mW for 28 seconds. This, as 1 set, was performed 10 times for a total of 5 minutes, and then, there was a pause for 55 minutes. This 1 hour process, as 1 cycle, was repeatedly performed until the battery voltage became 1.05 V, and the number of cycles was evaluated. Discharging was performed in an atmosphere of 20°C.

With respect to a battery in each state, that before storage and that after storage at 60°C, discharging according to Discharge Condition (B) was performed, and the capacity retention rate of the battery after storage was calculated. For the storage of the battery, the battery fabricated in (3), in an undischarged state, was stored at 40°C for 3 days, and then, was further stored in a constant temperature chamber set to 60°C under atmospheric pressure. The storage period in the constant temperature chamber was 1 week.

### [Example 2]

Except for making 0.5 wt% be the amount of ZnO allowed to be contained in the alkaline electrolyte, a battery was fabricated in the same manner as in Example 1.

### [Example 3]

Except for making 1 wt% be the amount of ZnO allowed to be contained in the alkaline electrolyte, a battery was fabricated in the same manner as in Example 1.

### (7) X-ray Diffraction Measurement of Positive Electrode after Discharging

On a positive electrode of the battery of Example 3, X-ray diffraction measurement was performed. A sample for X-ray diffraction measurement was prepared in the following manner: The battery, on which discharging was performed until 0.9 V or 0.7 V under the above Discharge Condition (A), was disassembled and the positive electrode material mixture was taken out. Then, the positive electrode material mixture was grinded by using a mortar.

In order to perform X-ray diffraction of the positive electrode material mixture with more accuracy, an alkaline electrolyte in the positive electrode material mixture was removed by the following manner.
The grinded positive electrode material mixture was put into a beaker of 300 ml, and after added with ion-exchanged water until the total amount of the positive electrode material mixture and ion-exchanged water became 250 ml, was kneaded. Subsequently, the mixture was left to stand for 3 hours, the supernatant liquid was removed, and then, ion-exchanged water was added until the total amount with the positive electrode material mixture became 250 ml again. This operation was performed for a total of 3 times, and thus, the supernatant liquid was removed.
The obtained sample, after dried in air at 50°C for 24 hours, was grinded in a mortar, and the resultant was used as the sample for X-ray diffraction measurement.

X-ray diffraction measurement of the sample was performed, by using a fully-automatic multi-purpose X-ray diffraction device (X'pert PRO MPD manufactured by PANalytical, Inc.) as the X-ray diffraction device. The measurement condition is shown as follows.

Sample amount: 0.4 g
Sample plate: A sample glass plate of 15 mm x 20 mm, having a sample holding portion which is composed of a recess of 0.5 mm
Scanning range: 10 to 80°
Voltage / Current: 45 kV / 40 mA
Scanning mode: Continuous
Step width: 0.02°
Scanning speed: 600 s/step
Slit width: (DS / SS / RS) : 0.5°/ none / 0.1 mm
Target: Cu
Filter: C (monochromator)

In a chart for X-ray diffraction using CuKa ray, the peak intensity (including the background intensity) originating from manganese oxide and having the highest intensity within the range of 2θ = 20° to 23°, was referred as peak intensity A. In the case where identification of a diffraction peak was difficult, the peak intensity (including the background intensity) at 2θ = 21.6° was regarded as peak intensity A.

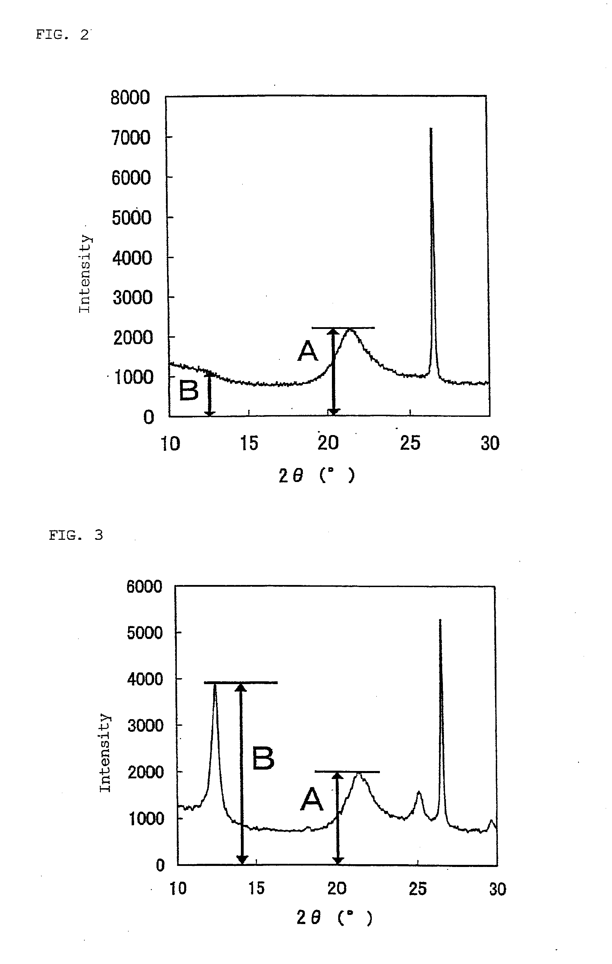

In a chart for X-ray diffraction using CuKα ray, the peak intensity (including the background intensity) having the highest intensity within the range of 2θ = 11° to 14° was referred as peak intensity B. In the case where identification of a diffraction peak was difficult, the peak intensity (including the background intensity) at 2θ = 12.48° was regarded as peak intensity B.
With respect to the battery of Example 3 after discharging until 0.9 V under Discharge Condition (A), the X-ray diffraction chart for the positive electrode is shown in FIG. 2.

### [Example 4]

Except for making 1.5 wt% be the amount of ZnO allowed to be contained in the alkaline electrolyte, a battery was fabricated in the same manner as in Example 1.

### [Example 5]

Except for making 2 wt% be the amount of ZnO allowed to be contained in the alkaline electrolyte, a battery was fabricated in the same manner as in Example 1.

### [Example 6]

Except for making 5 wt% be the amount of ZnO allowed to be contained in the alkaline electrolyte, a battery was fabricated in the same manner as in Example 1.

### [Comparative Example 1]

Except for not adding metatitanic add to the positive electrode material mixture, and for making 1 wt% be the amount of ZnO allowed to be contained in the alkaline electrolyte, a battery was fabricated in the same manner as in Example 1. It should be noted that, with respect to the battery of Comparative Example 1 after discharging until 0.9 V under Discharge Condition (A), the X-ray diffraction chart for the positive electrode is shown in FIG 3.

### [Comparative Example 2]

Except for not allowing ZnO to be contained in the alkaline electrolyte, a battery was fabricated in the same manner as in Example 1.

### [Example 7]

Except for adding to the positive electrode material mixture 0.02 wt% of metatitanic acid powder relative to the total weight of electrolytic manganese dioxide and graphite, and for making 1 wt% be the ZnO amount allowed to be contained in the alkaline electrolyte, a battery was fabricated in the same manner as in Example 1.

### [Example 8]

Except for adding to the positive electrode material mixture 0.05 wt% of metatitanic acid powder relative to the total weight of electrolytic manganese dioxide and graphite, a battery was fabricated in the same manner as in Example 7.

### [Example 9]

Except for adding to the positive electrode material mixture 0.1 wt% of metatitanic acid powder relative to the total weight of electrolytic manganese dioxide and graphite, a battery was fabricated in the same manner as in Example 7.

### [Example 10]

Except for adding to the positive electrode material mixture 0.4 wt% of metatitanic acid powder relative to the total weight of electrolytic manganese dioxide and graphite, a battery was fabricated in the same manner as in Example 7.

### [Example 11]

Except for adding to the positive electrode material mixture 0.5 wt% of metatitanic acid powder relative to the total weight of electrolytic manganese dioxide and graphite, a battery was fabricated in the same manner as in Example 7.

### [Example 12]

Except for adding to the positive electrode material mixture 0.9 wt% of metatitanic acid powder relative to the total weight of electrolytic manganese dioxide and graphite, a battery was fabricated in the same manner as in Example 7.

### [Example 13]

Except for adding to the positive electrode material mixture 1 wt% of metatitanic acid powder relative to the total weight of electrolytic manganese dioxide and graphite, a battery was fabricated in the same manner as in Example 7.

With respect to the batteries of Examples 1, 2, 4, 5, and 6, discharging was performed under Discharge Condition (A). In addition, with respect to the batteries of Examples 3, 7 to 13, and Comparative Examples 1 and 2, discharging was performed under Discharge Conditions (A) and (B). Results are shown in Table 1 to Table 3. It should be noted that, in Tables 1 and 2, the content of ZnO in the alkaline electrolyte does not include ZnO added to the alkaline electrolyte used for the fabrication of the positive electrode material mixture pellet.

**[Table 1]**

| | Formulated Amount | | After Storage at 40°C for 3 Days | | |
|---|---|---|---|---|---|
| | Amount of Metatitanic Acid (wt%) | ZnO Amount in Alkaline Electrolyte Solution (wt%) | Ti Amount in Positive Electrode of Battery (wt%) | ZnO Amount in Undischarged Battery (wt%) | Discharge Time under Discharge Condition (A) (h) |
| Example 1 | 0.2 | 0.1 | 0.09 | 0.2 | 9.72 |
| Example 2 | 0.2 | 0.5 | 0.09 | 0.6 | 9.71 |
| Example 3 | 0.2 | 1 | 0.09 | 1.1 | 9.71 |
| Example 4 | 0.2 | 1.5 | 0.09 | 1.6 | 9.68 |
| Example 5 | 0.2 | 2 | 0.09 | 2.1 | 9.66 |
| Example 6 | 0.2 | 5 | 0.09 | 5.10 | 9.63 |
| Comparative Example 1 | 0 | 1 | 0 | 1.2 | 9.39 |
| Comparative Example 2 | 0.2 | 0 | 0.09 | 0.05 | 9.4 |

**[Table 2]**

| | Formulated Amount | | After Storage at 40°C for 3 Days | | |
|---|---|---|---|---|---|
| | Amount of Metatitanic Acid (wt%) | ZnO Amount in Alkaline Electrolyte Solution (wt%) | Ti Amount in Positive Electrode of Undischarged Battery (wt%) | ZnO Amount in Undischarged Battery (wt%) | Discharge Time under Discharge Condition (A) (h) |
| Example 7 | 0.02 | 1 | 0.007 | 1.19 | 9.63 |
| Example 8 | 0.05 | 1 | 0.015 | 1.16 | 9.69 |
| Example 9 | 0.1 | 1 | 0.044 | 1.13 | 9.70 |
| Example 3 | 0.2 | 1 | 0.09 | 1.1 | 9.72 |
| Example 10 | 0.4 | 1 | 0.18 | 1 | 9.71 |
| Example 11 | 0.5 | 1 | 0.23 | 0.9 | 9.70 |
| Example 12 | 0.9 | 1 | 0.43 | 0.8 | 9.68 |
| Example 13 | 1 | 1 | 0.46 | 0.3 | 9.60 |
| Comparative Example 1 | 0 | 1 | 0 | 1.2 | 9.39 |
| Comparative Example 2 | 0.2 | 0 | 0.09 | 0.05 | 9.4 |

**[Table 3]**

| Discharge Condition | (A) | (A) | (B) |
|---|---|---|---|
| Characteristics | Value (B / A)_{0.9} | Value (B / A)_{0.7} | Capacity Retention Rate after Storage (%) |
| Example 7 | 0.52 | 1.94 | 80.0 |
| Example 8 | 0.52 | 1.92 | 80.3 |
| Example 9 | 0.51 | 1.89 | 82.2 |
| Example 3 | 0.51 | 1.67 | 82.5 |
| Example 10 | 0.49 | 1.65 | 82.0 |
| Example 11 | 0.48 | 1.63 | 81.5 |
| Example 12 | 0.46 | 1.44 | 81.0 |
| Example 13 | 0.44 | 0.57 | 70.0 |
| Comparative Example 1 | 1.95 | 1.75 | 54.1 |
| Comparative Example 2 | 0.5 | 1.69 | 49 |

Discharge time of the batteries of Comparative Examples 1 and 2 under Discharge Condition (A) was 9.39 hours and 9.4 hours, respectively. On the other hand, discharge time of the batteries of Examples 1 to 13 was 9.6 hours or longer for each battery. Due to the above, with respect to batteries containing ZnO in the alkaline electrolyte, it was found that discharge performance improves due to the positive electrode containing metatitanic acid.

Discharge time of the batteries of Examples 3 and 8 to 12, whose amounts of metatitanic acid were 0.05 to 0.9 wt% relative to the total of the positive electrode active material and graphite, was 9.68 hours or longer for each battery.

In addition, the capacity retention rate of the battery of Example 13 after storage was 70%. On the other hand, the capacity retention rates of the batteries of Examples 3 and 7 to 12 after storage were all 80% or greater.
Due to the above, it was found that the amount of metatitanic acid being 0.05 to 0.9 wt% relative to the total of the positive electrode active material and graphite, was more preferable.

Particularly, discharge time of the batteries of Examples 3, 9, 10, and 11 was 9.7 hours or longer for each battery. Thus, it was found that the amount of metatitanic acid being 0.1 to 0.5 wt% relative to the total of the positive electrode active material and graphite, was more preferable.

In the battery of Comparative Example 1, the value B/A ((B/A)_{0.9}) after discharging until the battery voltage became 0.9 V, was 1.95, and the capacity retention rate after storage was 54.1%. In contrast, (B/A)_{0.9} of the batteries of Examples 3 and 7 to 13 was 1 or smaller for each battery, and the capacity retention rates after storage were 70% or greater. Thus, it is evident that in the batteries of Examples 3 and 7 to 13, productions of hetaerolite and the like are suppressed when discharging is performed until 0.9 V, which is within the general use range of batteries, and that as a result, the capacity retention rates after storage are good.

In the battery of Example 13, (B/A)_{0.9} and the value B/A ((B/A)_{0.7}) after discharging until the battery voltage became 0.7 V, were both 1 or smaller, and the capacity retention rate after storage was 70%. On the other hand, in the batteries of Examples 3 and 7 to 12, (B/A)_{0.9} was 1 or smaller, but (B/A)_{0.7} was 1 or greater, and the capacity retention rates after storage were 80% or greater.

More specifically, in the batteries of Examples 3 and 7 to 12, productions of hetaerolite and the like were suppressed at discharge voltages up to 0.9 V, but hetaerolite and the like were not suppressed at discharge voltages up to 0.7 V. That is, it is considered that, since metatitanic acid did not exist excessively enough to suppress hetaerolite and the like at discharge voltages up to 0.7 V, the amounts of titanium oxide and ZnO to be deposited within the battery case were able to be reduced, and the rise of internal resistance of the battery was able to be suppressed. Since the discharge capacity is calculated from the discharge amounts up to a discharge voltage of 0.9 V, even when hetaerolite and the like are produced at a discharge voltage of 0.7 V, there is practically no problem.

In addition, in Comparative Example 2, (B/A)_{0.9} is 1 or smaller and (B/A)_{0.7} is 1 or greater, but the ZnO content is 0 wt%. Thus, the corrosion of the negative electrode was great, causing the discharge time under Discharge Condition (A) to be short, being 9.4 hours, and worsening the capacity retention rate after storage, being 49%.
Due to the above, it was found that, in order to further improve discharge capacity, it is preferable that the value B/A of the positive electrode after discharging until a battery voltage of 0.9 V is 1 or smaller, and that the value B/A of the positive electrode after discharging until a battery voltage of 0.7 V is 1 or greater.

### [Industrial Applicability]

As the above, according to the present invention, effective achievement of high capacity for primary alkaline batteries is possible, and an improvement in heavy load discharge characteristics is also promising. Therefore, the industrial worth is extremely significant. The present invention is also effective for primary alkaline batteries having a positive electrode with nickel oxyhydroxide contained therein.
In addition, the present invention is effective for not only AA-sized batteries, but also for: D-sized, C-sized, AAA-sized, and N-sized batteries; and 9V batteries.

## Claims

1. An alkaline primary battery comprising: a positive electrode containing a positive electrode active material and graphite; a negative electrode containing a negative electrode active material; a separator; and an alkaline electrolyte,
wherein said positive electrode active material contains manganese dioxide,
said alkaline electrolyte contains zinc oxide, and
said positive electrode contains metatitanic acid.

2. The alkaline primary battery in accordance with claim 1, wherein an amount of said metatitanic acid relative to the total of said positive electrode active material and graphite, is 0.05 to 0.9 wt%.

3. The alkaline primary battery in accordance with claim 1, wherein a Ti content in said positive electrode, is 0.015 to 0.43 wt%.

4. The alkaline primary battery in accordance with claim 1, wherein an amount of said zinc oxide contained in said alkaline electrolyte, is 0.1 to 5 wt%.

5. The alkaline primary battery in accordance with claim 1, wherein, in a chart for X-ray diffraction using CuKα ray for said positive electrode, when the diffraction peak intensity having the highest intensity within the range of 2θ = 20° to 23° is referred as A, and the diffraction peak intensity having the highest intensity within the range of 11° to 14° is referred as B, a value B/A of said positive electrode after discharging until the battery voltage becomes 0.9 V, is 1 or smaller.

6. The alkaline primary battery in accordance with claim 5, wherein said value B/A of said positive electrode after discharging until the battery voltage becomes 0.7 V, is 1 or greater.

7. The alkaline primary battery in accordance with claim 5, wherein said value B/A of said positive electrode after discharging until the battery voltage becomes 0.9 V, is 0.52 or smaller.
